Europäisches Patentamt

European Patent Office

Office européen des brevets

(11) Publication number: **0 112 957**
**B1**

(12) **EUROPEAN PATENT SPECIFICATION**

(45) Date of publication of patent specification: **21.05.86**

(51) Int. Cl.⁴: **B 23 B 51/04**

(21) Application number: **83101771.0**

(22) Date of filing: **23.02.83**

(54) Drill assembly.

(30) Priority: **29.12.82 JP 232228/82**

(43) Date of publication of application:
**11.07.84 Bulletin 84/28**

(45) Publication of the grant of the patent:
**21.05.86 Bulletin 86/21**

(84) Designated Contracting States:
**DE FR GB IT SE**

(56) References cited:
**EP-A-0 014 423**
**DE-A-2 654 400**
**DE-C- 50 894**
**DE-C- 421 186**
**DE-C- 867 937**
**GB-A- 410 334**
**US-A-1 515 548**
**US-A-4 248 555**

(73) Proprietor: **Showa Precision Industries Co., Ltd.**
**17-27, Ohiraki 2-chome Fukushima-ku**
**Osaka-shi Osaka (JP)**

(72) Inventor: **Masanori, Sato**
**A23-210,5, Fushishirodai 3-chome**
**Suita-shi Osaka (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a drill assembly or a drill head.

Drill assemblies are known which have a notched edge insert and a straight-edge insert arranged symmetrically with respect to the center axis for smaller cutting resistance. Although such drill assemblies have a good cutting efficiency in drilling a large-diameter hole, they are necessarily attended with runout during drilling because of some difference in the distance from the center axis to the actual cutting points on the notched-edge insert and the straight-edge insert even if the cutting load on these two inserts is balanced. Particularly in cutting deep holes, high machining accuracy cannot be expected.

One conventional measure taken for solving this problem was to have a plurality of guide bolts screwed radially into the drill body, a ball or roller being embedded in each of said guide bolts at their tip so that it will contact the inner wall of the hole being drilled (see US—A—4248555). However, this measure has a shortcoming that the chip finding way into between the outer periphery of the drill head and the inner wall of the hole being drilled will get caught or entangled around the guide bolts or the ball or roller at their tip, thus preventing the drill from turning or marring the inner wall of the hole being machined.

An object of the present invention is to provide a drill assembly which obviates the above-said shortcoming.

In accordance with the present invention, a drill assembly is provided which comprises a body being formed in the center thereof with a center hole axially extending, with two angular cuts for chip ejection, and in the upper surface thereof with two recesses extending radially, a center drill mounted in said center hole, a first insert having a straight cutting edge and clamped in one of said recesses, a second insert having a notched cutting edge and clamped in the other of said recesses, characterized in that a pair of guide plates are removably mounted on the rear of said body, said guide plates being of such a shape that their outer periphery will contact the inner wall of the hole being drilled and having a thickness decreasing as it approaches from their trailing end toward their leading end.

Other objects and features of the present invention will become apparent from the following description taken with reference to the accompanying drawings, in which:

Fig. 1 is a perspective exploded view of the first embodiment of the present invention;

Fig. 2 is a side view thereof;

Fig. 3 is a vertical sectional front view thereof;

Fig. 4 is a view similar to Fig. 3 of the second embodiment;

Fig. 5 is a similar view of the third embodiment; and

Fig. 6 is a similiar view of the fourth embodiment.

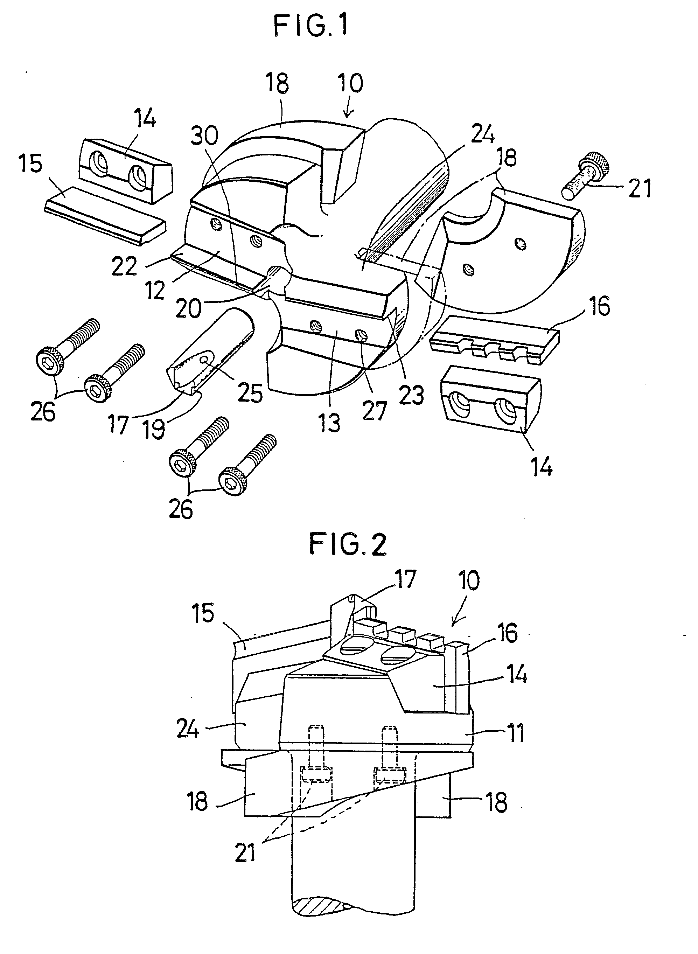

Referring to Figs. 1—3, the first embodiment of the drill head 10 according to the present invention has a body 11 formed with two radial recesses 12, 13 and with two angular cuts 24 symmetrical to the axis of the drill head. Two inserts 15, 16 are clamped in these radial recesses 12, 13 by means of cotters 14, respectively. One insert 15 has a straight cutting edge whereas the other insert 16 has a notched cutting edge with a plurality of notches. A center drill 17 is mounted in a center hole 20 axially formed in the center of the body 11. A pair of guide plates 18 are removably mounted on the back of the non-cut portions of the body 11.

The radial recesses 12, 13 have vertical surfaces 22, 23 at one side thereof and have inclined surfaces at the other side thereof. The cotters 14 are of a shape complementary to that of the recesses 12, 13. When the cotters 14 are pushed into the recesses 12, 13 with the inserts 15, 16 in position, respectively, and clamped by bolts 26, they act as a wedge, thus clamping the inserts in the recesses 12, 13 against the vertical side surfaces 22, 23.

The surfaces 22, 23 of the recesses 12, 13 should preferably be in alignment with the axis of the body 11, but if not in exact alignment, drilling will be possible without any difficulty. The surfaces 22, 23 may not be vertical but inclined so long as the cotters 14 are of a shape complementary thereto.

The center drill 17 is formed with an axial groove 19 extending from its top to near its bottom. When mounted in the recess 13, the notched insert 16 has its inner end engaged in the groove 18 of the drill to prevent the center drill from turning with respect to the drill body 11.

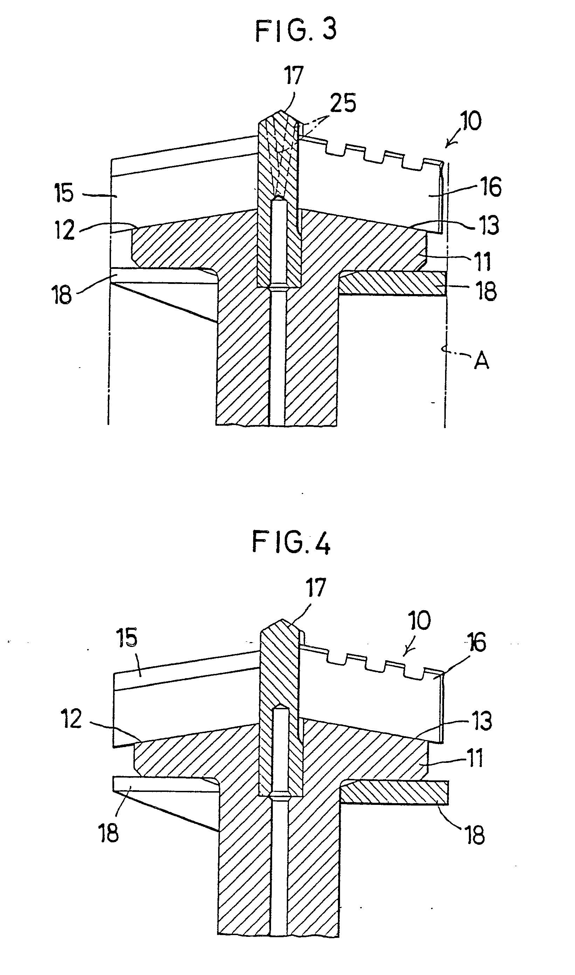

The guide plates 18 are of such a size that their outer peripheral surface closely contact the inner wall A of the hole being drilled. The guide plates 18 have a thickness decreasing from their trailing end toward their leading end as seen from Fig. 3. The guide plates 18 are bolted to the back of the body 11 with bolts 21, with their leading end not protruding into the cut 24, as shown in Fig. 1 by a dotted line, for smooth chip ejection. Their trailing end may or may not protrude into the cut because it does no affect chip ejection. If their trailing end is of such a size as to protrude into the cut, the protruding end should be tapered as shown.

The center drill 17 is formed with a hole 25 for supplying cutting oil. For the same purpose it may be formed with a hole in its outer periphery communicating with the center hole in the body 11.

Referring to Fig. 4 showing the second embodiment, one insert 16 has its notched edge disposed slightly above the straight edge of the other insert 15 so that the notched edge firstly will cut the metal and then the straight edge do. For this arrangement, either the recess 13 for the notched insert 16 may be shallower than the recess 12 for the straight insert 15, or the insert 16 may have a larger height than the insert 15 with the recesses 12, 13 having the same depth.

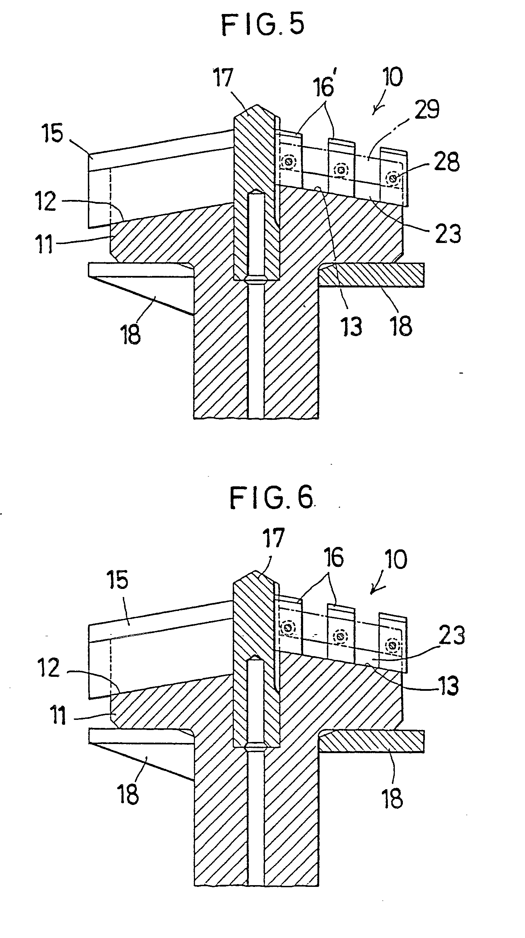

Referring to Fig. 5 showing the third embodiment, a plurality of small inserts 16', instead of a single notched insert, are mounted in the recess 13 with an equal distance therebetween. They are clamped from the front side to the body 11 with setscrews 28. The cotter for the insert 16 used in the first embodiment is omitted in this embodiment. Instead, the body 11 is formed with a support surface 29 for the rear side of the inserts 16' and the groove surface 23 is low enough for secure clamping.

The fourth embodiment of Fig. 6 is almost the same as the third embodiment of Fig. 5 except that the edges of the small inserts 16' are slightly above the cutting edge of the other insert 15 as in the second embodiment.

In any of the embodiments, the ratio of the notched portions to the effective portions on the notched insert 16 or a series of small inserts 16' should preferably be about 50% for levelling of the cutting resistance on the inserts.

The insert 15 having a straight cutting edge may be replaced with a notched insert so long as its remaining portions make up for the notched portions in the notched insert 16 or insert 16'.

The notched-edge insert may be what is called a stepped insert having the edge sections slightly retracted toward the shank of the drill with the greater degree for the outer edge portions.

The insert 15 having a straight cutting edge may be displaced in a radial direction according to the diameter of the hole to be drilled. In order to determine how much the insert 15 projects radially, the body 11 is provided with a graduation 30. If the diameter of the hole to be drilled is changed by displacing the insert 15 radially, the guide plate 18 has to be replaced with a suitable one adapted for the new diameter.

In accordance with the present invention, because the guide plate is removably mounted on the rear of the drill body so that its outer periphery will be in close contact with the inner wall of the hole being drilled during drilling, the drill body is prevented from movement in a radial direction by the center drill and the guide plate. This ensures no runout and high machining accuracy.

Another advantage is that chip cannot enter into between the guide plate and the workpiece, damaging the inner wall of the hole being drilled.

Since the guide plates are made to become thinner toward their leading end, chip is ejected smoothly along their rear surface without any fear of clogging during drilling.

The drill assembly having the notched cutting edge slightly above the straight cutting edge has an advantage of less cutting resistance.

The drill assembly having a plurality of small inserts to form a notched cutting edge is more economical because if one of the small inserts should get damaged, only the damaged one has to be replaced instead of replacing the entire notched insert.

## Claims

1. A drill assembly comprising a body (11) being formed in the center thereof with a center hole (20) axially extending, with two angular cuts (24) for chip ejection, and in the upper surface thereof with two recesses (12, 13) extending radially, a center drill (17) mounted in said center hole, a first insert (15) having a straight cutting edge and clamped in one of said recesses, a second insert (16) having a notched cutting edge and clamped in the other of said recesses, characterized in that a pair of guide plates (18) are removably mounted on the rear of said body, said guide plates being of such a shape that their outer periphery will contact the inner wall of the hole being drilled and having a thickness decreasing as it approaches from their trailing end toward their leading end.

2. The drill assembly as claimed in claim 1, wherein the cutting edge of said second insert (16) is disposed above the cutting edge of said first insert (15).

3. The drill assembly as claimed in claim 1 or 2, wherein said second insert (16) have a plurality of small inserts (16') equally spaced from one another.

## Patentansprüche

1. Bohrkopfaufbau mit einem Grundkörper (11) mit einer axial verlaufenden mittigen Bohrung (20), mit zwei Winkelausschnitten (24) für den Spanauswurf und mit zwei radialen Ausnehmungen (12, 13) in der Frontfläche des Grundkörpers, mit einem in der mittigen Bohrung befestigten Zentrierbohrer (17), mit einem ersten Einsatzmeißel (15) mit gerader Schneidkante, der in einer der Ausnehmungen (12) eingespannt ist, und mit einem zweiten Einsatzmeißel (16) mit gekerbter Schneidkante, der in der anderen Ausnehmung (13) eingespannt ist, dadurch gekennzeichnet, daß zwei Führungsplatten (18) auf der Rückseite des Grufdkörpers lösbar befestigt sind, die eine solche Form haben, daß ihr Außenumfang die Innenwand des Bohrloches berührt und deren Dicke vom Hinterende zum Vorderende hin abnimmt.

2. Bohrkopfaufbau nach Anspruch 1, dadurch gekennzeichnet, daß die Schneidkante des zweiten Einsatzmeißels (16) oberhalb der Schneidkante des ersten Einsatzmeißels (15) angeordnet ist.

3. Bohrkopfaufbau nach einem der Ansprüche 1 oder 2, dadurch gekennzeichnet, daß der zweite Einsatzmeißel (16) eine Vielzahl von kleinen, voneinander gleichbeastandeten Einsatzmeißeln (16') aufweist.

## Revendications

1. Un ensemble de perçage comportant un corps (11) dans le centre duquel est formé un trou central (20) s'étendant axialement, avec deux couteaux angulaires (24) pour l'éjection des copeaux, et dans la surface supérieure deux évidements (12, 13) s'étendant radialement, un forêt central (17) monté dans ledit trou, une première pièce rapportée (16) ayant un bord coupant rectiligne et serrée dans l'un desdits évidements, une seconde pièce rapportée (16) ayant un bord coupant cranté et serrée dans l'autre évidement, caractérisé en ce que deux plaques de guidage (18) sont montées amovibles à l'arrière dudit corps, lesdites plaques de guidage ayant un profil tel que leur périphérie extérieure touche la paroi intérieure du trou en cours de perçage et ayant une épaisseur décroissante en se rapprochant depuis leur extrémité arrière de leur extrémité avant.

2. L'ensemble de perçage selon la revendication 1, dans lequel le bord coupant de ladite seconde pièce rapportée (16) est disposé au-dessus du bord coupant de ladite première pièce rapportèe (15).

3. L'ensemble de perçage selon la revendication 1 ou 2, dans lequel ladite seconde pièce rapportée (16) comporte plusieurs petites pièces rapportées (16') également espacées l'une de l'autre.

# FIG.1

# FIG.2

FIG. 3

FIG.4

# FIG.5

# FIG.6